(19) Europäisches Patentamt / European Patent Office / Office européen des brevets

(11) **EP 4 614 594 A1**

(12) **EUROPEAN PATENT APPLICATION**
published in accordance with Art. 153(4) EPC

(43) Date of publication:
**10.09.2025 Bulletin 2025/37**

(21) Application number: **23886343.5**

(22) Date of filing: **03.11.2023**

(51) International Patent Classification (IPC):
$H01M\ 4/36$ (2006.01)   $H01M\ 4/38$ (2006.01)
$H01M\ 4/587$ (2010.01)   $C01B\ 33/02$ (2006.01)
$H01M\ 4/134$ (2010.01)   $H01M\ 10/052$ (2010.01)
$H01M\ 4/02$ (2006.01)

(52) Cooperative Patent Classification (CPC):
C01B 33/02; H01M 4/02; H01M 4/134; H01M 4/36;
H01M 4/38; H01M 4/587; H01M 10/052;
Y02E 60/10

(86) International application number:
**PCT/KR2023/017454**

(87) International publication number:
**WO 2024/096649 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 KR 20220146033**

(71) Applicant: **Hansol Chemical Co., Ltd Seoul 06169 (KR)**

(72) Inventors:
• **PARK, Byung-Hoon**
  **Wanju-gun, Jeollabuk-do 55321 (KR)**

• **KANG, Sung-Hwan**
  **Wanju-gun, Jeollabuk-do 55321 (KR)**
• **GONG, Min-Kyung**
  **Wanju-gun, Jeollabuk-do 55321 (KR)**
• **PARK, Joo-Yeon**
  **Wanju-gun, Jeollabuk-do 55321 (KR)**
• **KWON, Se-Man**
  **Wanju-gun, Jeollabuk-do 55321 (KR)**

(74) Representative: **Louis Pöhlau Lohrentz Patentanwälte Postfach 30 55 90014 Nürnberg (DE)**

(54) **ANODE ACTIVE MATERIAL, PREPARATION METHOD THEREFOR AND LITHIUM SECONDARY BATTERY COMPRISING SAME**

(57) The present invention relates to an anode active material, a preparation method therefor and a lithium secondary battery comprising same, the anode active material comprising at least one metal-containing particle, wherein the ratio $(r_2/r_1)$ of the radius $(r_1)$ of the anode active material to the length $(r_2)$ of the longest linear line for connecting a center point of the anode active material and a distal end of the center point of the anode active material of the metal-containing particle positioned at the farthest distance is 0.8-0.95.

Fig. 1

EP 4 614 594 A1

## Description

### Technical Field

The present disclosure relates to a negative electrode active material, a preparation method therefor, and a lithium secondary battery including the negative electrode active material and, more particularly, to a negative electrode active material with improved performance by adjusting the ratio $(r_2/r_1)$ and/or porosity, wherein $r_1$ is the radius of the negative electrode active material and $r_2$ is the length of the longest linear line connecting the center point of the negative electrode active material and a distal end of a metal-containing particle positioned at the farthest distance from the center point of the negative electrode active material, a preparation method for the negative electrode active material and, and a lithium secondary battery including the negative electrode active material.

### Background Art

With high energy density and ease of design, lithium-ion batteries (LIBs) are used as the main power source for mobile electronic devices, and their application range is expanding to electric vehicles or power storage devices for renewable energy.

In order to use lithium-ion batteries in new applications, continuous research on LIB materials with higher energy density, longer life, etc. is required.

Particularly, research has been conducted on various materials such as carbon, silicon, tin, and germanium for use as negative electrodes in lithium-ion batteries.

Among these, silicon-based materials have received much attention because they have a much higher energy density than currently commercialized graphite materials.

However, silicon-based negative electrodes have fatal flaws, including the formation of an unstable solid electrolyte interphase (SEI) layer due to side reactions between silicon surfaces and electrolytes, which reduces electrochemical properties, and the pulverization of electrode materials due to internal stress caused by rapid volume expansion during lithiation/delithiation.

To solve the above problem, many studies have been conducted to improve reversibility of silicon-based negative electrode materials through a variety of surface treatments, and in particular, carbon coating on the silicon surface or combining silicon with carbon materials are being widely studied.

Nevertheless, surface treatments using carbon materials require complex and expensive processes, and although some properties of silicon-based negative electrodes are improved through surface treatments using carbon materials, there are limitations in implementing high-power, long-life, fast charging/discharging LIBs.

Thus, there is a need for technological development for high-capacity silicon-based negative electrode active materials that can further enhance battery characteristics while suppressing volume expansion of silicon-based negative electrode materials.

[Related Art Documents]

[Patent Documents]

(Patent Document 1) Korean Patent Application Publication No. 10-2017-0044360

### Disclosure

### Technical Problem

Accordingly, the present disclosure aims to provide a negative electrode active material for high-capacity, high-energy density, high-power, and long-life secondary batteries.

In addition, the present disclosure aims to provide a preparation method for the negative electrode active material with high efficiency and low cost.

In addition, the present disclosure aims to provide an electrode and a lithium secondary battery containing the negative electrode active material.

However, the objectives to be achieved by the present application are not limited to the aforementioned ones, and other objectives not mentioned can be clearly understood by those skilled in the art from the following description.

**Technical Solution**

In an aspect of the present application, a negative electrode active material including at least one metal-containing particle,

wherein the ratio ($r_2/r_1$) of the length ($r_2$) of the longest linear line connecting the center point of the negative electrode active material and a distal end of a metal-containing particle positioned at the farthest distance from the center point of the negative electrode active material to the radius ($r_1$) of the negative electrode active material is 0.8 or more and 0.95 or less,

is provided.

In another aspect of the present application, an electrode including the negative electrode active material is provided.

In still another aspect of the present application, a lithium secondary battery including: a negative electrode containing the negative electrode active material;

a positive electrode positioned opposite to the negative electrode; and
an electrolyte disposed between the negative electrode and the positive electrode is provided.

**Advantageous Effects**

According to a negative electrode active material of the present disclosure, a secondary battery having high capacity and high energy density, as well as high output and long life can be provided.

Furthermore, a negative electrode active material can be manufactured with high efficiency and low cost.

**Description of Drawings**

FIG. 1 is a schematic view showing the radius ($r_1$) of a negative electrode active material and the length ($r_2$) of the longest linear line connecting the center point of the negative electrode active material and a distal end of a metal-containing particle positioned at the farthest distance from the center point of the negative electrode active material according to an embodiment of the present disclosure.

FIG. 2 is a graph showing the capacity/efficiency characteristics of cells using negative electrode active materials manufactured according to Examples 1 to 3 and Comparative Examples 1 to 6.

FIG. 3 is a graph showing the life characteristics of cells using negative electrode active materials manufactured according to Examples 1 to 3 and Comparative Examples 1 to 6.

FIG. 4 is a graph showing the output characteristics of cells using negative electrode active materials manufactured according to Examples 1 to 3 and Comparative Examples 1 to 6.

**Best Mode**

Terms and words used in this specification and claims should not be construed as limited to their ordinary or dictionary meanings. Based on the principle that the inventor(s) can appropriately define the concept of the term to explain his or her invention in the best way, the terms and words are required to be interpreted as meaning and concept consistent with the technical idea of the present disclosure.

Therefore, the configuration of the embodiments described in this specification is only one of the most preferred embodiments of the present disclosure and does not represent the entire technical idea of the present disclosure. It should be understood that at the time of filing this application, there may be various equivalents and modifications that can replace the embodiments.

In this specification, singular expressions include plural expressions, unless the context clearly indicates otherwise. In this specification, terms such as "include", "comprise", or "have" are intended to indicate the presence of implemented features, numbers, steps, components, or combinations thereof. The terms should be understood as not precluding the presence or addition of one or more other features, numbers, steps, components, or combinations thereof.

In this specification, "to" and "~" in "a to b" and "a to b" indicating numerical ranges are defined as $\geq a$ and $\leq b$

In a negative electrode active material according to an aspect of the present application, the ratio ($r_2/r_1$) of the length ($r_2$) of the longest linear line connecting the center point of the negative electrode active material and a distal end of a metal-containing particle positioned at the farthest distance from the center point of the negative electrode active material

to the radius ($r_1$) of the negative electrode active material may be 0.8 or more and 0.95 or less.

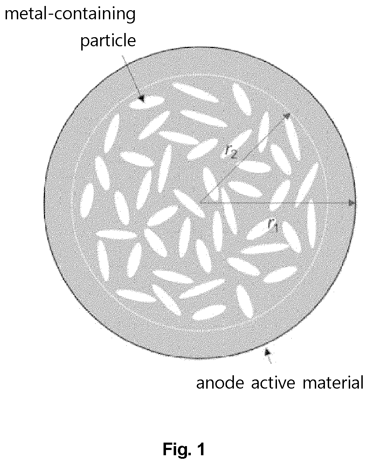

The $r_1$ and $r_2$ of the negative electrode active material are as shown in FIG. 1. For example, when the metal-containing particle of the negative electrode active material is in a flake shape as shown in FIG. 1, the $r_2$ is the distance (distance of the longest linear line) between the center point of the negative electrode active material and one of the two ends of the metal-containing particle, which is farthest from the center point of the negative electrode active material.

If the $r_2/r_1$ of the negative electrode active material exceeds or falls below the range of the present application, the life characteristics and output characteristics of a secondary battery may deteriorate.

This is because when $r_2/r_1$ exceeds the range of the present application, the carbon matrix may be destroyed by volume expansion of the metal-containing particle (e.g., silicon particle), and when $r_2/r_1$ falls below the range of the present application, the movement of lithium ions to the metal-containing particle (e.g., silicon particle) may be hindered.

In addition, the negative electrode active material may include a core and a shell surrounding the core, and the metal-containing particle may include at least one selected from the group consisting of Mg, Al, Si, Ca, Fe, Mg, Mn, Co, Ni, Zn and Ge, and the metal-containing particle may be included in the core.

In an embodiment, the metal-containing particle may be a silicon (Si)-containing particle, and the silicon (Si)-containing particle may include at least one selected from the group consisting of a silicon particle, a silicon oxide particle, a silicon carbide particle, and a silicon alloy particle.

In addition, a mean diameter (D50) of the silicon (Si)-containing particle is 80 nm or more and 200 nm or less, and may be represented by Formula 1 below.

$$[\text{Formula 1}]$$

$$SiO_x \ (0 \leq x \leq 0.5)$$

In Formula 1, when x exceeds 0.5, there may be a detrimental effect on battery capacity and efficiency. That is, lithium ions react with oxygen to form $Li_2O$, Li-silicates ($Li_xSi_yO_z$), etc., which can be irreversible. As a result, lithium ions reacting with the negative electrode material cannot return to the electrolyte or positive electrode material and are trapped inside the negative electrode, preventing the capacity from being realized and reducing the efficiency.

In addition, the silicon carbide may be, for example, SiC, and the silicon alloy may be, for example, a Si-Z alloy (wherein Z is at least one element selected from an alkali metal, an alkaline earth metal, an element of group 13, an element of group 14, a transition metal, a rare earth element, and combinations thereof, and is not Si).

The mean diameter of the silicon (Si)-containing particle was measured using a particle size analyzer (Mastersizer 3000, Malvern Panalytical) using an organic solution in which the silicon (Si)-containing particles were dispersed.

When the mean diameter of the silicon (Si)-containing particle exceeds 200 nm, high battery capacity may be achieved, but battery life may be very short, whereas when the mean diameter of the silicon (Si)-containing particle is less than 80 nm, the battery capacity and efficiency may decrease and the manufacturing cost may increase.

In an embodiment, the negative electrode active material may include 30 wt% or more and 80 wt% or less of a carbon-based material.

For example, the carbon content of the negative electrode active material may be 50% or more and 55% or less, and the oxygen content may be 5.5% or more and 6.5% or less.

The carbon-based material may be at least one of amorphous carbon and crystalline carbon.

In an embodiment, the amorphous carbon may be at least one selected from the group consisting of coal pitch, mesophase pitch, petroleum pitch, tar, coal oil, petroleum heavy oil, organic synthetic pitch, sucrose, naphthalene resin, polyvinyl alcohol resin, furfuryl alcohol resin, polyacrylonitrile resin, polyamide resin, phenolic resin, furan resin, cellulose resin, styrene resin, epoxy resin or vinyl chloride resin, block copolymer, polyol and polyimide resin.

In addition, the crystalline carbon may be at least one selected from the group consisting of natural graphite, artificial graphite, expanded graphite, graphene, carbon black, and fullerene.

Natural graphite is graphite that occurs naturally, and includes flake graphite, high crystalline graphite, and amorphous graphite (microcrystalline or cryptocrystalline graphite). Artificial graphite is artificially synthesized graphite, made by heating amorphous carbon at high temperatures, and includes primary graphite (electrographite), secondary graphite, and graphite fiber.

Expanded graphite is a material in which a chemical substance such as an acid or alkali is intercalated between layers of graphite and heated to expand the vertical layers of the molecular structure. Graphene contains a single layer or multiple single layers of graphite.

Carbon black is less regularly crystalline than graphite, and may be converted into graphite when heated at about 3,000 °C for a long time. Fullerene is a carbon mixture containing at least 3 wt% fullerene, a polyhedral bundle-shaped compound consisting of 60 or more carbon atoms. The first carbon-based material may use one type of crystalline carbon alone or a combination of two or more types. For example, natural graphite or artificial graphite may be used. The crystalline carbon may have a spherical, plate-like, fiber-like, tubular or powder form.

Preferably, pitch may be used as the amorphous carbon. The pitch may be pitch with a softening point of 100 to 250 °C, and in particular, petroleum-based or coal-based pitch having the quinolone insoluble (QI) content of 5 wt% or less, more preferably 1 wt% or less, may be used.

Meanwhile, natural graphite may be preferably used as the crystalline carbon. The purity of the graphite may be high purity grades with a fixed carbon content of 99 wt% or more, more preferably 99.95 wt% or more.

In addition, flake graphite may be suitable for enhancing conductivity through contact with metal-containing particles.

Meanwhile, the weight ratio of amorphous carbon and crystalline carbon (weight of amorphous carbon/weight of crystalline carbon) of the negative electrode active material may be 0.6 or more and 1 or less.

For example, the weight ratio may be 0.7 or more and 0.99 or less.

When the weight ratio of amorphous carbon and crystalline carbon (weight of amorphous carbon/weight of crystalline carbon) of the negative electrode active material exceeds or falls below the range of the present application, the $r_2/r_1$ value of the negative electrode active material is outside the range of the present application and may deteriorate the characteristics of a secondary battery.

In an embodiment, the core and the shell may include at least one selected from the group consisting of amorphous carbon and crystalline carbon.

For example, the core may include both the amorphous carbon and the crystalline carbon, and the shell may include both the amorphous carbon and the crystalline carbon.

The additional carbon component of the core and shell may play a role in alleviating the volume expansion of metal-containing particles during charging and discharging.

In an embodiment, a mean diameter (D50) of the negative electrode active material may be 3 μm or more and 20 μm or less.

Meanwhile, the negative electrode active material may include pores. In particular, pores may be formed mainly in the core of the above negative electrode active material. The pores may reduce the initial irreversible capacity of a secondary battery and help alleviate volume expansion of metal-containing particles.

In an embodiment, the porosity of the negative electrode active material may be 10% or less. When the porosity of the negative electrode active material exceeds the range of the present application, the lifespan and output characteristics of a secondary battery may be deteriorated.

This is because when the porosity exceeds 10%, the electrolyte solvent may penetrate into the pores due to the destruction of the carbon matrix, which acts as a factor that damages metal-containing particles (e.g., silicon particles), thereby reducing the lifetime of a battery. In addition, the output characteristics may be degraded because the smooth electrochemical reaction may be hindered due to the decrease in electron transfer path density.

A preparation method for a negative electrode active material according to an another aspect of the present application may include: producing a precursor powder by spray drying a solution containing a metal-containing particle; mixing the precursor powder, amorphous carbon, and crystalline carbon to form a composite; and heat treating.

The metal-containing particle provided in the step of producing the precursor powder may be prepared by being ground to have a desired mean diameter through grinding.

The metal may be at least one selected from Si, Al, Ti, Mn, Ni, Cu, V, Zr, Mn, Co, Fe and Nb.

In an embodiment, the step of mixing may be performed by a physical method.

The physical method may include at least one selected from the group consisting of high-energy processes such as milling, stirring, mixing, and compression.

For example, the step of mixing may be performed by ball milling. In particular, a planetary ball mill may efficiently mix and grind the mixture by mixing in a non-contact manner with functions of rotating and revolving.

Balls used in ball milling may be, for example, zirconia balls, etc., and there is no limitation on the type of balls, and the size of the balls may be, for example, about 0.3 to 10 mm, but is not limited thereto.

Meanwhile, the reaction time of the mixing step may be from 1 minute to 24 hours, the reaction temperature may be from 40 to 250 °C, and the reaction atmosphere may be the conditions of air or an inert atmosphere.

In an embodiment, the step of heat treating may include a primary heat treating and a secondary heat treating.

The heat treatment temperature of the primary heat treating step may be 100 to 500 °C, the heat treatment time may be 10 to 48 hours, and the primary heat treating may be performed under a vacuum atmosphere.

The heat treatment temperature of the secondary heat treating step may be 600 to 1,000 °C, the heat treatment time may be 1 to 48 hours, and the secondary heat treating may be performed under an inert gas (e.g., nitrogen, argon, etc.) atmosphere.

The weight ratio of the amorphous carbon and the crystalline carbon mixed in the mixing step (weight of amorphous carbon/weight of crystalline carbon) may be 0.6 or more and 1 or less.

An electrode according to still another aspect of the present application may include the negative electrode active material. A lithium secondary battery may have the electrode including the negative electrode active material as a negative electrode, and may include: a positive electrode positioned opposite to the negative electrode; and an electrolyte disposed between the negative electrode and the positive electrode.

The negative electrode includes the negative electrode active material, and may be manufactured, for example, by a method of preparing a negative electrode active material composition by mixing a negative electrode active material, a binder, and optionally a conductive agent in a solvent, and then molding the negative electrode active material composition into a predetermined shape or applying the composition to a current collector such as copper foil.

The negative electrode may additionally include negative electrode active materials commonly used as a negative electrode active material of a lithium battery in the relevant technical field in addition to the above-described negative electrode active material. Commonly used negative electrode active materials may include, for example, at least one selected from the group consisting of lithium metal, metals alloyable with lithium, transition metal oxides, non-transition metal oxides, and carbon-based materials.

For example, the metal that may be alloyed with the lithium above may be Si, Sn, Al, Ge, Pb, Bi, Sb a Si-Y alloy (wherein Y is an alkali metal, an alkaline earth metal, an element of group 13, an element of group 14, a transition metal, a rare earth element or a combination thereof, but not Si), and a Sn-Y alloy (wherein Y is an alkali metal, an alkaline earth metal, elements of group 13 to 16, a transition metal, a rare earth element or a combination thereof, and is not Sn). The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

For example, the transition metal oxides may be lithium titanium oxides, vanadium oxides, lithium vanadium oxides, etc.

For example, the non-transition metal oxides may be $SnO_2$, $SiO_x$ ($0 < x \leq 2$), etc. The carbon-based materials may be crystalline carbon, amorphous carbon, or a mixture thereof. The crystalline carbon may be graphite such as natural graphite or artificial graphite in the form of amorphous carbon, plate-like, flake-like, spherical or fiber-like, whereas the amorphous carbon may be soft carbon (low-temperature calcined carbon), hard carbon, mesophase pitch carbide, calcined coke, etc.

When the negative electrode active material and carbon-based material are used together, the oxidation reaction of the silicon-based active material is suppressed, an SEI film is effectively formed, a stable film is formed, and the electrical conductivity is improved, so that the charging/discharging characteristics of lithium may be further improved.

Common negative electrode active materials may be blended and mixed with the above-described negative electrode active material, coated on the surface of the above-described negative electrode active material, or used in any other combined form.

The binder used in the negative electrode active material composition is a component that assists in the bonding of the negative electrode active material and the conductive agent and the bonding to the current collector, and is added in an amount of 1 to 50 parts by weight based on 100 parts by weight of the negative electrode active material. For example, the binder may be added in an amount of 1 to 30 parts by weight, 1 to 20 parts by weight, or 1 to 15 parts by weight based on 100 parts by weight of the negative electrode active material.

Examples of binders include polyvinylidene fluoride, polyvinylidene chloride, polybenzimidazole, polyimide, polyvinyl acetate, polyacrylonitrile, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polystyrene, polymethyl methacrylate, polyaniline, acrylonitrile butadiene styrene, phenolic resin, epoxy resin, polyethylene terephthalate, polytetrafluoroethylene, polyphenylene sulfide, polyamide-imide, polyetherimide, polyethylene sulfone, polyamide, polyacetal, polyphenylene oxide, polybutylene terephthalate, ethylene-propylene-diene polymer (EPDM), sulfonated EPDM, styrene butadiene rubber, fluororubber, various copolymers.

The negative electrode may optionally further include a conductive agent to provide a conductive path to the negative electrode active material to further improve electrical conductivity.

As the conductive agent, anything that is generally used in lithium batteries may be used and examples include conductive materials including: carbon-based materials such as carbon black, acetylene black, Ketjen black, and carbon fibers (e.g., vapor-grown carbon fibers); metallic materials such as metal powders or metal fibers, such as copper, nickel, aluminum, and silver; and conductive polymers such as polyphenylene derivatives, or a mixture thereof. The content of the conductive agent may be appropriately adjusted and used. For example, the weight ratio of the negative electrode active material and the conductive agent may be in the range of 99:1 to 90:10.

As the solvent, N-Methylpyrrolidone (NMP), acetone, water, etc., may be used. The content of the solvent is 1 to 10 parts by weight based on 100 parts by weight of the negative electrode active material. When the content of the solvent is within the above range, the work for forming an active material layer is easy.

In addition, the current collector is generally made with a thickness of 3 to 500 $\mu$m. The current collector is not particularly limited as long as it is conductive and does not cause a chemical change in a battery, and for example, copper, stainless steel, aluminum, nickel, titanium, calcined carbon, copper or stainless steel surface-treated with carbon, nickel, titanium, silver, etc., aluminum-cadmium alloy, etc., may be used.

In addition, by forming fine irregularities on the surface of the current collector, the bonding strength of the negative electrode active material may be improved. The current collector may have various forms such as that of a film, a sheet, a foil, a net, a porous body, a foamed body, and a non-woven fabric.

The negative electrode plate may be produced by directly coating the prepared negative electrode active material composition on a current collector, or by casting the negative electrode active material composition on a separate support and laminating the negative electrode active material film peeled from the support onto a copper current collector. The negative electrode is not limited to the forms listed above and may have forms other than the above forms.

The negative electrode active material composition may be used not only for manufacturing electrodes for lithium secondary batteries, but may also be used for manufacturing printable batteries by being printed on a flexible electrode substrate.

Separately, a positive electrode active material composition is prepared by mixing a positive electrode active material, a conductive agent, a binder, and a solvent to manufacture the positive electrode.

As the positive electrode active material, any lithium-containing metal oxide commonly used in the relevant technical field may be used.

For example, a compound represented by any one of the following formulas: $Li_aA_{1-b}B_bD_2$ (wherein $0.90 \leq a \leq 1.8$, and $0 \leq b \leq 0.5$); $Li_aE_{1-b}B_bO_{2-c}D_c$ (wherein $0.90 \leq a \leq 1.8$, $0 \leq b \leq 0.5$, and $0 \leq c \leq 0.05$); $LiE_{2-b}B_bO_{4-c}D_c$ (wherein $0 \leq b \leq 0.5$, $0 \leq c \leq 0.05$); $Li_aNi_{1-b-c}CO_bB_cD_\alpha$ (wherein $0.90 \leq a \leq 1.8$, $0 \leq b \leq 0.5$, $0 \leq c \leq 0.05$, $0 < \alpha \leq 2$); $Li_aNi_{1-b-c}Co_bB_cO_{2-\alpha}F_\alpha$ (wherein $0.90 \leq a \leq 1.8$, $0 \leq b \leq 0.5$, $0 \leq c \leq 0.05$, $0 < \alpha < 2$); $Li_aNi_{1-b-c}Co_bB_cO_{2-\alpha}F_\alpha$ (wherein $0.90 \leq a \leq 1.8$, $0 \leq b \leq 0.5$, $0 \leq c \leq 0.05$, $0 < \alpha < 2$); $Li_aNi_{1-b-c}Mn_bB_cD_\alpha$ (wherein $0.90 \leq a \leq 1.8$, $0 \leq b \leq 0.5$, $0 \leq c \leq 0.05$, $0 < \alpha \leq 2$); $Li_aNi_{1-b-c}Mn_bB_cO_{2-\alpha}F_\alpha$ (wherein $0.90 \leq a \leq 1.8$, $0 \leq b \leq 0.5$, $0 \leq c \leq 0.05$, $0 < \alpha < 2$); $Li_aNi_{1-b-c}Mn_bB_cO_{2-\alpha}F_\alpha$ (wherein $0.90 \leq a \leq 1.8$, $0 \leq b \leq 0.5$, $0 \leq c \leq 0.05$, $0 < \alpha < 2$); $Li_aNi_bE_cG_dO_2$ (wherein $0.90 \leq a \leq 1.8$, $0 \leq b \leq 0.9$, $0 \leq c \leq 0.5$, $0.001 \leq d \leq 0.1$); $Li_aNi_bCo_cMn_dGeO_2$ (wherein $0.90 \leq a \leq 1.8$, $0 \leq b \leq 0.9$, $0 \leq c \leq 0.5$, $0 \leq d \leq 0.5$, $0.001 \leq e \leq 0.1$); $Li_aNiG_bO_2$ (wherein $0.90 \leq a \leq 1.8$, $0.001 \leq b \leq 0.1$); $Li_aCoG_bO_2$ (wherein $0.90 \leq a \leq 1.8$, $0.001 \leq b \leq 0.1$); $Li_aMnG_bO_2$ (wherein $0.90 \leq a \leq 1.8$, $0.001 \leq b \leq 0.1$); $Li_aMn_2G_bO_4$ (wherein $0.90 \leq a \leq 1.8$, $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$.

In the above formulas, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; J is V, Cr, Mn, Co, Ni, Cu, or a combination thereof.

The compound may have a surface coating layer. Alternatively, a mixture of the compound and a compound having a coating layer may be used. The coating layer may include a compound of a coating element selected from oxide, hydroxide, oxyhydroxide, oxycarbonate, or hydroxycarbonate of the coating element. The compound constituting the coating layer may be amorphous or crystalline. As the coating element included in the coating layer, Mg, Al, Co, K, Na, Ca, Si, Ti, V, Sn, Ge, Ga, B, As, Zr or a mixture thereof may be used. The coating layer may be formed using a compound of these coating elements by any method that does not adversely affect the physical properties of the positive electrode active material. For example, spray coating, dipping, or any other suitable coating method. Thus, a detailed description thereof will be omitted herein.

For example, $LiNiO_2$, $LiCoO_2$, $LiMn_xO_{2x}$ ($x = 1, 2$), $LiNi_{1-x}Mn_xO_2$ ($0 < x < 1$), $LiNi_{1-x-y}Co_xMn_yO_2$ ($0 \leq x \leq 0.5$, $0 \leq y \leq 0.5$), $LiFeO_2$, $V_2O_5$, TiS, MoS, etc., may be used.

In the positive electrode active material composition, the conductive agent, the binder and the solvent may be the same as those used in the negative electrode active material composition described above. In some cases, it is also possible to further add a plasticizer to the positive electrode active material composition and the negative electrode active material composition to create pores in electrode plates. The contents of the positive electrode active material, the conductive agent, the binder and the solvent are at levels typically used in lithium batteries.

The positive electrode current collector has a thickness of 3 to 500 $\mu$m, and is not particularly limited as long as it has high conductivity without causing chemical changes in the fabricated battery. Examples of the positive electrode current collector include stainless steel, aluminum, nickel, titanium, calcined carbon, or aluminum or stainless steel surface-treated with carbon, nickel, titanium, silver. The current collector may form fine irregularities on the surface thereof to improve adhesion to the positive electrode active material. The current collector may have various forms such as that of a film, a sheet, a foil, a net, a porous body, a foamed body, and a non-woven fabric.

The prepared positive electrode active material composition may be directly coated and dried on the positive electrode current collector to manufacture a positive electrode plate. Alternatively, the positive electrode active material composition may be cast on a separate support, and then the film obtained by peeling off the support may be laminated on the positive electrode current collector to manufacture a positive electrode plate.

The negative electrode and the positive electrode may be separated from each other by a separator. The separator may be any separator that is commonly used for lithium batteries. For example, a suitable separator may have low resistance to migration of ions in an electrolyte and possess an excellent electrolyte retention capability. Examples of a material for the separator include glass fiber, polyester, Teflon, polyethylene, polypropylene, polytetrafluoroethylene (PTFE), or a combination thereof, each of which may be a non-woven fabric or a woven fabric. The separator may have a pore diameter of about 0.01 $\mu$m to about 10 $\mu$m and a thickness of about 5 $\mu$m to about 300 $\mu$m.

A lithium salt-containing non-aqueous electrolyte consists of a non-aqueous electrolyte and a lithium. Examples of the non-aqueous electrolyte are a non-aqueous electrolyte solution, an organic solid electrolyte, an inorganic solid electrolyte, or the like.

As the non-aqueous electrolyte solution, an aprotic organic solvent may be used. Examples of the aprotic organic solvent are N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofurane, dimethyl sulfoxide, 1,3-dioxolane, formamide, dimethylformamide, acetonitrile, nitromethane, methyl formate, methyl acetate, triester of phosphoric acid, trimethoxy methane, a dioxolane derivative, sulfolane, methyl sulfolane, 1,3-dimethyl-2-imidazolidinone, a propylene carbonate derivative, a tetrahydrofuran derivative, ethers, methyl propylene propionate, and ethyl propionate.

Examples of the organic solid electrolyte may include a polyethylene derivative, a polyethylene oxide derivative, a polypropylene oxide derivative, a phosphate ester polymer, poly agitation lysine, polyester sulfide, polyvinyl alcohol, polyvinylidene fluoride, and a polymer containing an ionic dissociative group.

Examples of the inorganic solid electrolyte may include nitrides, halides, and sulfates of Li, such as $Li_3N$, $LiI$, $Li_5NI_2$, $Li_3N-LiI-LiOH$, $LiSiO_4$, $LiSiO_4-LiI-LiOH$, $Li_2SiS_3$, $Li_4SiO_4$, $Li_4SiO_4-LiI-LiOH$, and $Li_3PO_4-Li_2S-SiS_2$.

The lithium salt may be any one of suitable lithium salts commonly used in lithium secondary batteries and a material easily soluble in the non-aqueous electrolyte, for example, one or more of $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$, lithium chloroborate, lower aliphatic carboxylic acid lithium, lithium tetraphenyl borate, and imide may be used.

A lithium secondary battery may be categorized as a lithium ion battery, a lithium ion polymer battery, or a lithium polymer battery, according to the type of separator and/or electrolyte included therein. A lithium secondary battery may be classified as a cylindrical-type, rectangular-type, coin-type, or pouch-type, according to a shape thereof. A lithium secondary battery may also be classified as either a bulk-type or thin film-type, according to a size thereof.

A Method of manufacturing lithium secondary batteries may is widely known in this field, and thus a detailed description thereof is omitted.

**Mode for Invention**

Hereinafter, the present application will be described in more detail using examples and comparative examples, but the present application is not limited thereto.

[Example 1]

A pulverized ground silicon solution was prepared by mixing 5 parts by weight of flake-shaped silicon particles (mean diameter ($D_{50}$): 5 $\mu$m), 94 parts by weight of isopropyl alcohol (IPA), and 1 part by weight of stearic acid, placing the mixture in a bead mill, and grinding until the mean diameter ($D_{50}$) of the silicon particles becomes 110 nm.

The prepared pulverized ground silicon solution was spraydried to produce a silicon precursor having a mean diameter ($D_{50}$) of 6 $\mu$m.

The produced silicon precursor was put into a composite formation device (manufactured by Hansol Chemical) with petroleum pitch and graphite in a weight ratio of 45:25:30, and mixed to form a composite for 10 minutes, followed by primary heat treatment at 180 °C in a vacuum atmosphere for 24 hours.

Afterwards, a secondary heat treatment was performed at 900 °C for 3 hours under an inert atmosphere to manufacture a composite material.

The composite material was classified into 325 mesh to obtain a negative electrode active material.

[Example 2]

A negative electrode active material was manufactured in the same manner as in Example 1, except that the weight ratio of silicon precursor, pitch, and graphite was 45:23:32 parts by weight, respectively.

[Example 3]

A negative electrode active material was manufactured in the same manner as in Example 1, except that the weight ratio of silicon precursor, pitch, and graphite was 45:27:28 parts by weight, respectively.

[Comparative Example 1]

A negative electrode active material was manufactured in the same manner as in Example 1, except that the weight ratio of silicon precursor, pitch, and graphite was 45:30:25 parts by weight, respectively.

[Comparative Example 2]

A negative electrode active material was manufactured in the same manner as in Example 1, except that the weight ratio of silicon precursor, pitch, and graphite was 45:33:22 parts by weight, respectively.

[Comparative Example 3]

A negative electrode active material was manufactured in the same manner as in Example 1, except that the weight ratio of silicon precursor, pitch, and graphite was 45:20:35 parts by weight, respectively.

[Comparative Example 4]

A negative electrode active material was manufactured in the same manner as in Example 1, except that the weight ratio of silicon precursor, pitch, and graphite was 45:18:37 parts by weight, respectively.

[Comparative Example 5]

A negative electrode active material was manufactured in the same manner as in Example 1, except that after mixing, the primary heat treatment was performed at 180 °C for 24 hours in a nitrogen atmosphere rather than a vacuum atmosphere.

[Comparative Example 6]

A negative electrode active material was manufactured in the same manner as in Example 1, except that after mixing, no primary or secondary heat treatment was performed.

[Preparation Example]

Manufacture of Coin Half-Cell

The negative electrode active materials manufactured in Examples 1 to 3 and Comparative Examples 1 to 6, a conductive material (Super P), and a binder (SBR-CMC) were uniformly mixed in a weight ratio of 94:2:4 to prepare a negative electrode slurry.

The prepared negative electrode slurry was coated on a copper thin film current collector having a thickness of 10 $\mu$m, and the coated electrode plate was dried at 120 °C for 20 minutes and then pressed to manufacture a negative electrode.

A CR2032-type coin half-cell was manufactured using the negative electrode, lithium metal as a counter electrode, a PE separator as a separator, and 1.0 M $LiPF_6$ dissolved in a mixed solvent of EC (ethylene carbonate): DEC (diethyl carbonate): DMC (dimethyl carbonate) (volume ratio) as an electrolyte.

Manufacture of Coin Full Cell

The negative electrode used in the above coin half-cell was used, and a positive electrode was manufactured as follows. After $LiNi 0.6Co 0.2Mn 0.2O 2$ as a positive electrode active material, a conductive agent (Super P), and a binder (PVDF) were mixed in a weight ratio of 95:2:3 to prepare a positive electrode slurry, the positive electrode slurry was coated on an aluminum foil current collector having a thickness of 12 $\mu$m, and the coated electrode plate was dried at 120 °C for 15 minutes and then pressed to manufacture the positive electrode.

A CR2032-type coin full cell was manufactured using the above positive and negative electrodes, a PE separator as a separator, and 1.5 M $LiPF_6$ dissolved in a mixed solvent of EC (ethylene carbonate): DEC (diethyl carbonate): DMC (dimethyl carbonate) (2:1:7 volume ratio) + FEC 5% as an electrolyte.

**Evaluation Example 1: Analysis of Negative Electrode Active Material**

The characteristics of the negative electrode active materials of Examples 1 to 3 and Comparative Examples 1 to 3 were analyzed and shown in Table 1 below.

[Table 1]

| | Negative electrode active material (composit e) particle size ($D_{50}$) ($\mu$m) | Carbon content (%) | Oxygen content (%) | $r_2/r_1$ | Porosity (%) |
|---|---|---|---|---|---|
| Example 1 | 6.11 | 51.4 | 5.9 | 0.89 | 6.9 |
| Example 2 | 6.01 | 51.7 | 6.3 | 0.93 | 7.3 |
| Example 3 | 5.87 | 50.7 | 5.8 | 0.82 | 5.8 |
| Comparative Example 1 | 5.97 | 50.6 | 6.1 | 0.77 | 9.7 |
| Comparative Example 2 | 6.08 | 50.3 | 5.8 | 0.71 | 5.6 |
| Comparative Example 3 | 5.91 | 51.8 | 5.9 | 0.96 | 7.7 |
| Comparative Example 4 | 6.03 | 52.3 | 6.0 | 0.98 | 8.7 |
| Comparative Example 5 | 6.07 | 51.9 | 5.7 | 0.86 | 17.8 |
| Comparative Example 6 | 5.96 | 52.0 | 6.4 | 0.80 | 23.9 |

In Table 1 above, the particle size ($D_{50}$) of the negative electrode active material (composite) was measured using a particle size measuring device (Mastersizer 3000, Malvern Panalytical) using organic solutions in which the negative electrode active materials of Examples 1 to 3 and Comparative Examples 1 to 6 were dispersed.

In addition, the particle size (D50) of the silicon particles used in the production of the negative electrode active materials of Examples 1 to 3 and Comparative Examples 1 to 6 was also measured in the same manner as the particle size measurement method of the negative electrode active material.

Meanwhile, the carbon content was measured using ELEMENTRAC CS-i (ELTRA) to quantify the amount of carbon-containing gas such as carbon dioxide and carbon monoxide generated by burning the negative electrode active materials of Examples 1 to 3 and Comparative Examples 1 to 6 at high temperatures. The oxygen content was measured by using 836 Series (LECO) to quantify the amount of gas containing oxygen generated by burning the negative electrode active materials of Examples 1 to 3 and Comparative Examples 1 to 6 at high temperatures.

In addition, to calculate the above $r_2/r_1$, cross sections of the negative electrode active materials of Examples 1 to 3 and Comparative Examples 1 to 6 were processed using a focused-ion beam (FIB), and the cross sections were observed using an field emission scanning electron microscopy (FE-SEM) to measure $r_1$ and $r_2$.

Meanwhile, the porosity of the negative electrode active material was calculated by the following Equation 1. In the following Equation 1, the true density was 2.33 g/cc. The total pore volume of the negative electrode active materials of Examples 1 to 3 and Comparative Examples 1 to 6 was measured using a TriStar II 3020 device from Micromeritics. The total pore volume was measured based on the amount of nitrogen gas adsorbed according to the change in relative pressure at liquid nitrogen temperature (77 K).

<Equation 1>

$$\text{porosity}(\%) = \frac{\text{total pore volume (cc/g)}}{\frac{1}{\text{true density (g/cc)}} + \text{total pore volume}}$$

According to Table 1 above, the particle size of the negative electrode active materials of Examples 1 to 3 was 5.87 to 6.11 $\mu$m, the carbon content was 50.7 to 51.7%, the oxygen content was 5.8 to 6.3%, the $r_2/r_1$ value was 0.82 to 0.89, and the porosity was 5.8 to 6.9%.

In addition, the $r_2/r_1$ value tends to decrease as the content of petroleum pitch increases and the content of graphite decreases during the manufacture of the negative electrode active material.

That is, it was confirmed that the $r_2/r_1$ value of the negative electrode active material may be controlled by controlling the content of petroleum pitch and graphite during the manufacture of the negative electrode active material.

In addition, comparing Example 1 and Comparative Examples 5 and 6, which differ only in heat treatment conditions, it was confirmed that the porosity increased significantly, especially when the primary heat treatment conditions were changed or the primary and secondary heat treatments were not performed.

That is, it was confirmed that the porosity of the negative electrode active material may be controlled by changing the heat treatment conditions during the manufacture of the negative electrode active material.

## Evaluation Example 2: Analysis of Battery Characteristics

The characteristics of cells using the negative electrode active materials of Examples 1 to 3 and Comparative Examples 1 to 6 were analyzed and shown in Table 2 below.

[Table 2]

| | Initial charge capacity (mAh/g) | Initial discharge capacity (mAh/g) | Initial Efficiency (%) | Lifespan (@200 cycles) | Output $(C_{5.0}/C_{0.1})$ |
|---|---|---|---|---|---|
| Example 1 | 1626.2 | 1432.7 | 88.1 | 63.6 | 72.3 |
| Example 2 | 1669.2 | 1467.2 | 87.9 | 62.5 | 70.9 |
| Example 3 | 1606.9 | 1410.9 | 87.8 | 62.5 | 71.0 |
| Comparative Example 1 | 1662.2 | 1397.9 | 84.1 | 55.7 | 54.6 |
| Comparative Example 2 | 1663.2 | 1390.4 | 83.6 | 58.3 | 53.4 |
| Comparative Example 3 | 1689.7 | 1475.1 | 87.3 | 43.7 | 67.1 |
| Comparative Example 4 | 1681.2 | 1477.8 | 87.9 | 45.1 | 66.1 |
| Comparative Example 5 | 1682.4 | 1460.3 | 86.8 | 51.1 | 59.7 |
| Comparative Example 6 | 1696.8 | 1452.5 | 85.6 | 51.8 | 57.8 |

The battery characteristics of the coin half-cell and coin full cell manufactured using the negative electrode active materials prepared in Examples 1 to 3 and Comparative Examples 1 to 6 were evaluated as follows.

The coin full cell was used to evaluate lifespan and output characteristics, and the coin half-cell was used to evaluate initial capacity, discharge capacity, and initial efficiency characteristics.

The coin half-cells manufactured using the negative electrode active materials prepared in Examples 1 to 3 and Comparative Examples 1 to 6 were charged at a constant current of 0.1 C rate at 25 °C until the voltage reached 0.01 V (vs. Li), and then charged at a constant voltage while maintaining 0.01 V until the current reached 0.05 C. After the fully charged cells were rested for 10 minutes and were discharged at a constant current of 0.1 C until the voltage reached 1.5 V (vs. Li) (performed twice, initial formation). The "C" refers to the discharge rate of the cell, a value obtained by dividing the total capacity of the cell by the total discharge time.

The coin full cells manufactured using the negative electrode active materials prepared in Examples 1 to 3 and Comparative Examples 1 to 6 were charged at a constant current of 0.1 C rate at 25 °C until the voltage reached 4.2 V (vs. Li), and then charged at a constant voltage while maintaining 4.2 V until the current reached 0.05 C. After the fully charged cells were rested for 10 minutes and were discharged at a constant current of 0.1 C until the voltage reached 2.7 V (vs. Li) (performed twice, initial formation).

Afterwards, the cells were charged at a constant current of 1.0 C rate at 25 °C until the voltage reached 4.2 V (vs. Li), and then charged at a constant voltage while maintaining 4.2 V until the current reached 0.05 C. After the fully charged coin cells were rested for 10 minutes, the discharging cycle was repeated with a constant current of 1.0 C until the voltage reached 2.7 V (vs. Li) (1st to 200th cycle).

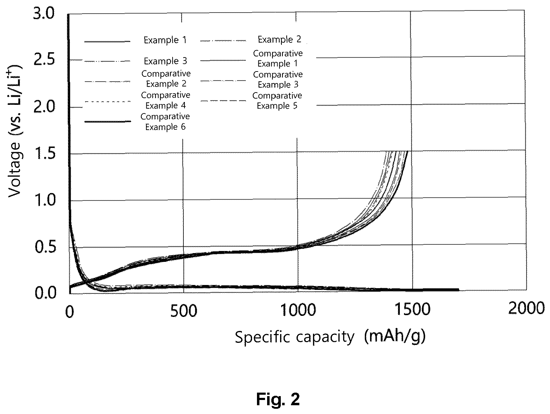

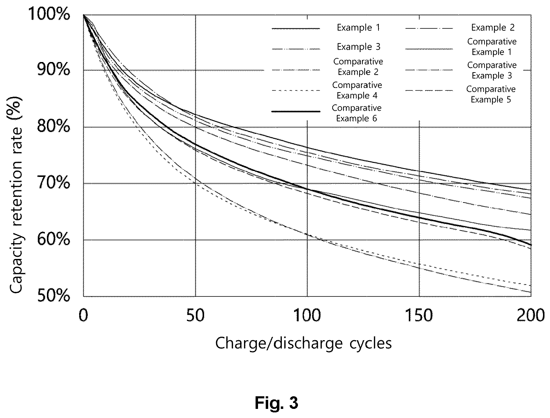

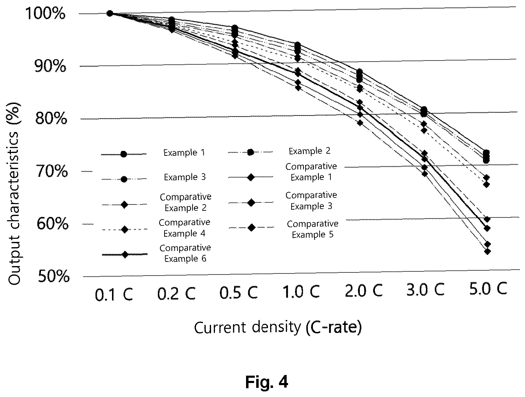

As an example, measurement graphs of capacity/efficiency, lifespan, and output characteristics of the cells manufactured using the negative electrode active materials prepared in Examples 1 to 3 and Comparative Examples 1 to 6 are shown in FIGS. 2 to 4.

Meanwhile, the initial charge capacities and initial discharge capacities in Table 2 are the charge and discharge capacities in the first cycle.

The initial efficiency, lifespan, and output characteristics were calculated from the following Equations 2 to 4.

Initial efficiency [%] = [Discharge capacity in 1st cycle/ Charge capacity in 1st cycle] x 100                    <Equation 2>

Lifespan characteristics [%] = [Discharge capacity in 200th cycle/ Discharge capacity in 1st cycle] x 100                    <Equation 3>

Output characteristics [%] = [Discharge capacity at 5.0 C/ Discharge capacity at 0.1 C] x 100                    <Equation 4>

According to Table 2, the initial efficiency of the secondary battery using the negative electrode active materials of Examples 1 to 3 may be 87% or more and 90% or less, the lifespan characteristics after 200 cycles of charging and discharging may be 60% or more, and the output characteristics (C 5.0/C 0.1) may be 70% or more.

To be specific, the initial charge capacity of the secondary battery using the negative electrode active materials of Examples 1 to 3 was 1606.9-1669.2 mAh/g, initial discharge capacity was 1410.9-1467.2 mAh/g, initial efficiency was 87.8-88.1%, the lifespan characteristics were 62.5-63.6%, and output characteristics were 70.9~72.3%.

In addition, it was confirmed that the value of $r_2/r_1$ and porosity of a negative electrode active material greatly affect the lifespan characteristics and output characteristics of a secondary battery.

In the case of secondary batteries using the negative electrode active materials of Comparative Examples 1 to 4 in which the value of $r_2/r_1$ deviates from 0.8 or more and 0.95 or less, it was confirmed that the lifespan characteristics and output characteristics of the secondary batteries were deteriorated compared to the secondary batteries using the negative electrode active materials of Examples 1 to 3.

That is, when the $r_2/r_1$ value was above or below the range of the present application, a secondary battery with excellent lifespan and output characteristics could not be obtained.

Meanwhile, in the case of secondary batteries using the negative electrode active materials of Comparative Examples 5 and 6 with a porosity exceeding 10%, even if the $r_2/r_1$ value is within the range of the present application, the lifespan and output characteristics of the secondary batteries were confirmed to be deteriorated compared to the secondary batteries using the negative electrode active materials of Examples 1 to 3.

In other words, even if the $r_2/r_1$ value is within the range of the present application, when the porosity exceeds the range of the present application, a secondary battery with excellent lifespan and output characteristics could not be obtained.

The scope of the present disclosure is indicated by the appended claims rather than the detailed description above, and the meaning and scope of the claims, and any changes or modifications derived from the concept of equivalents thereof should be construed as being included in the scope of the present disclosure.

**Industrial Applicability**

According to a negative electrode active material of the present disclosure, a secondary battery having high capacity and high energy density, as well as high output and long life may be provided.

Furthermore, a negative electrode active material may be manufactured with high efficiency and low cost.

**Claims**

1. A negative electrode active material comprising:

   at least one metal-containing particle,
   wherein a ratio ($r_2/r_1$) of a length ($r_2$) of a longest linear line connecting a center point of the negative electrode active material and a distal end of a metal-containing particle positioned at a farthest distance from the center point of the negative electrode active material to a radius ($r_1$) of the negative electrode active material is 0.8 or more and 0.95 or less.

2. The negative electrode active material of claim 1 comprises:

   a core; and
   a shell surrounding the core,
   wherein the metal-containing particle includes at least one selected from the group consisting of Mg, Al, Si, Ca, Fe, Mg, Mn, Co, Ni, Zn and Ge, and the metal-containing particle is included in the core.

3. The negative electrode active material of claim 1, wherein the metal-containing particle includes at least one selected from the group consisting of a silicon particle, a silicon oxide particle, a silicon carbide particle, and a silicon alloy particle.

4. The negative electrode active material of claim 1, further comprising:
   30 wt% or more and 80 wt% or less of a carbon-based material.

5. The negative electrode active material of claim 1, wherein a weight ratio of amorphous carbon and crystalline carbon (weight of amorphous carbon/weight of crystalline carbon) of the negative electrode active material is 0.6 or more and 1 or less.

6. The negative electrode active material of claim 2, wherein the core and the shell includes at least one selected from the group consisting of amorphous carbon and crystalline carbon.

7. The negative electrode active material of claim 1, wherein a mean diameter ($D_{50}$) of the negative electrode active material is 3 $\mu$m or more and 20 $\mu$m or less.

8. The negative electrode active material of claim 1, wherein a porosity of the negative electrode active material is 10% or less.

9. A preparation method for the negative electrode active material of any one of claims 1 to 8, the method comprising:

   producing a precursor powder by spray drying a solution containing a metal-containing particle;
   mixing the precursor powder, amorphous carbon and crystalline carbon to form a composite; and
   heat treating,
   wherein a metal contained in the particle is at least one selected from Si, Al, Ti, Mn, Ni, Cu, V, Zr, Mn, Co, Fe and Nb, and
   the heat treating comprises a primary heat treating and a secondary heat treating.

10. An electrode comprising:
   the negative electrode active material of any one of claims 1 to 8.

11. A lithium secondary battery comprising:

   a negative electrode comprising the negative electrode active material of any one of claims 1 to 8;
   a positive electrode positioned opposite to the negative electrode; and
   an electrolyte disposed between the negative electrode and the positive electrode.

metal-containing
particle

anode active material

**Fig. 1**

Fig. 2

**Fig. 3**

**Fig. 4**

## INTERNATIONAL SEARCH REPORT

| International application No. |
| --- |
| **PCT/KR2023/017454** |

| | |
| --- | --- |
| **A. CLASSIFICATION OF SUBJECT MATTER** | |
| **H01M 4/36**(2006.01)i; **H01M 4/38**(2006.01)i; **H01M 4/587**(2010.01)i; **C01B 33/02**(2006.01)i; **H01M 4/134**(2010.01)i; **H01M 10/052**(2010.01)i; **H01M 4/02**(2006.01)i | |
| According to International Patent Classification (IPC) or to both national classification and IPC | |

| |
| --- |
| **B. FIELDS SEARCHED** |
| Minimum documentation searched (classification system followed by classification symbols) |
| H01M 4/36(2006.01); C01B 32/05(2017.01); C01B 32/21(2017.01); H01M 10/052(2010.01); H01M 4/583(2010.01); H01M 4/587(2010.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 리튬 이차전지(lithium secondary battery), 음극(anode), 음극 활물질(anode active material), 금속 함유 입자(metal-containing particle), 반지름(radius), 분무 건조(spray drying), 혼합(mix), 열처리(heat) |

| |
| --- |
| **C. DOCUMENTS CONSIDERED TO BE RELEVANT** |

| Category* | Citation of document, with indication, where appropriate, of the relevant passages | Relevant to claim No. |
| --- | --- | --- |
| X | KR 10-2022-0004794 A (TOKAI CARBON KOREA CO., LTD.) 11 January 2022 (2022-01-11)<br>See claims 1-2, 5-6, 12 and 16-17; paragraphs [0051], [0064], [0075]-[0085], [0093] and [0111]; and figure 1. | 1-4,6-8,10-11 |
| Y | | 5,9 |
| Y | KR 10-2021-0151442 A (HANSOL CHEMICAL CO., LTD.) 14 December 2021 (2021-12-14)<br>See claims 1, 12 and 23; and paragraph [0064]. | 5,9 |
| Y | KR 10-2021-0035634 A (KOREA INSTITUTE OF SCIENCE AND TECHNOLOGY) 01 April 2021 (2021-04-01)<br>See claims 5, 8 and 11. | 9 |
| A | KR 10-1561274 B1 (POSCO et al.) 19 October 2015 (2015-10-19)<br>See entire document. | 1-11 |

| | |
| --- | --- |
| ✓ Further documents are listed in the continuation of Box C. | ✓ See patent family annex. |

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **06 February 2024** | **06 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/017454** |

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2234287 B1 (SAMSUNG SDI CO., LTD.) 31 March 2021 (2021-03-31)<br>See entire document. | 1-11 |

Form PCT/ISA/210 (second sheet) (July 2022)

**INTERNATIONAL SEARCH REPORT**
Information on patent family members

International application No.

**PCT/KR2023/017454**

| Patent document cited in search report | | | Publication date (day/month/year) | Patent family member(s) | | | Publication date (day/month/year) |
|---|---|---|---|---|---|---|---|
| KR | 10-2022-0004794 | A | 11 January 2022 | | None | | |
| KR | 10-2021-0151442 | A | 14 December 2021 | EP | 3920271 | A1 | 08 December 2021 |
| | | | | KR | 10-2433738 | B1 | 19 August 2022 |
| | | | | US | 2021-0384492 | A1 | 09 December 2021 |
| KR | 10-2021-0035634 | A | 01 April 2021 | KR | 10-2021-0157453 | A | 28 December 2021 |
| | | | | KR | 10-2383273 | B1 | 08 April 2022 |
| KR | 10-1561274 | B1 | 19 October 2015 | KR | 10-2015-0075207 | A | 03 July 2015 |
| KR | 10-2234287 | B1 | 31 March 2021 | KR | 10-2016-0018267 | A | 17 February 2016 |
| | | | | US | 11539043 | B2 | 27 December 2022 |
| | | | | US | 2016-0043390 | A1 | 11 February 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170044360